# EUROPEAN PATENT APPLICATION

(11) **EP 4 036 167 A1**
(43) Date of publication of application: **03.08.2022**
(21) Application number: 20906241.3
(22) Date of filing: 25.09.2020
(51) Int. Cl.: C08L 59/02, B22F 3/22

(54) **BINDER COMPOSITION FOR METAL POWDER INJECTION MOLDING**

(30) Priority: 24.12.2019 KR 20190173985; 24.09.2020 KR 20200124068
(71) Applicant: Kolon Plastics, Inc., Gyeongsangbuk-do 39537 (KR)
(72) Inventor: MIN, Doo Sik, Gimcheon-si Gyeongsangbuk-do 39537 (KR); OH, Jong Hoe, Gimcheon-si Gyeongsangbuk-do 39537 (KR)
(74) Representative: Ter Meer Steinmeister & Partner
(86) International application number: PCT/KR2020/013026
(87) International publication number: WO 2021/132854

(57) **Abstract**

The present invention relates to a binder composition for metal powder injection molding, and more specifically, to a binder composition for metal powder injection molding, which can be promptly debound, facilitates the setting of flow conditions in an injection process, and enables the minimization of poor debinding such as swelling, carbonization of low-molecular-weight binders, and other internal defects, during a debinding process.

The binder composition for metal powder injection molding of the present invention contains 10 to 50 wt% of a high-viscosity polyoxymethylene polymer and 50 to 90 wt% of a low-viscosity polyoxymethylene polymer.

By containing polyoxymethylenes alone, which has been produced with different viscosities, without feeding of other monomers in the polymerization process of polyoxymethylene, the binder composition for metal powder injection molding according to the present invention is more economical through low manufacturing costs compared with a conventional technique in which the rate of decomposition by a gas-phase acid is controlled by viscosity adjustment in a polymerization process, and has excellent injection characteristics and debinding/sintering characteristics compared with a technique in which polyoxymethylene and other polymer resins, such as polyolefins and polyamides, are used together.

## Description

### [Technical Field]

The present invention relates to a binder composition for metal powder injection molding, and more specifically, to a binder composition for metal powder injection molding which can be promptly debound, facilitates the setting of flow conditions in an injection process, and enables the minimization of poor debinding, such as swelling, carbonization of low-molecular-weight binders, and other internal defects, during a debinding process.

### [Background Art]

A metal injection molding (MIM) process is a method of combining advantages of injection molding technology in the plastics industry and a metal powder sintering technology in powder metallurgy. A conventional metal injection molding process is to mix a metal powder and a resin, injection-mold the mixture, and after removing the resin from a workpiece, sinter the workpiece, thereby manufacturing a product. This metal injection molding process adopts a relatively simple process to manufacture a plastic product, but may manufacture a three-dimensional metal workpiece, which is complex and precise and thus difficult to realize, to have high strength and density like a metal sintered product.

The metal product manufactured through the metal injection molding process is manufactured in a sintering method of binding the metal powder at a high temperature and thus has a drawback of exhibiting relatively lower density than a metal bulk product manufactured in a casting method or one having fine cracks.

In addition, heat applied thereto during the process may change a volume, resulting in defects such as lowering precision and the like. In order to prevent these types of physical property changes or the defects, when injectionmolded by using a binder, it is very important to control spacing and distribution of the metal powder, fluidity, and the like during the injection.

The binder is kneaded together with the metal powder in the metal injection molding process to mainly bind the metal powder particles. In addition, the binder may increase the fluidity of the mixture to promote the injection or adjust the spacing the metal powders and evenly disperse the metal powders to improve surface characteristics. Accordingly, development of a binder that suppresses deformation of a product during the debinding/sintering process and imparts high density, high strength, precise dimensional stability, and the like to metal products is actively being made.

In general, the binder is injected together in a mixed state with the metal powder to shape the metal powder. Subsequently, the binder should be removed in the debinding step, wherein the debinding may be performed in a solvent-debinding method of dissolving the resin into a solvent, a thermal debinding method of melting the resin by heating, a catalyst debinding method of using a catalyst, and the like.

A binder for the metal powder injection molding may have various compositions depending on the debinding methods, and in general, for the solvent debinding method, the binder may be composed of a polyolefin, an aliphatic wax, stearic acid, and the like. The solvent debinding method uses a solvent such as hexane, heptane, and the like, wherein these solvents are not free from fire hazard, a resin dissolved therein is difficult to recycle, and wastewater is generated in a large amount and thus is harmful to an environment.

In addition, the thermal debinding method, the binder may be composed of a polyolefin-based or a polystyrene-based resin, an aliphatic wax, stearic acid, and the like. The thermal debinding method simply uses heat to remove the binder, which requires a very long process time, a high working temperature, and an inert gas atmosphere, and accordingly, exhibits low energy efficiency and is uneconomical.

On the other hand, as for the catalyst debinding method of performing the debinding under an acid atmosphere, the binder is composed of a polyoxymethylene and a polyolefin, and if necessary, includes a wax. The catalyst debinding method, in which the polyoxymethylene is well decomposed under the acid atmosphere, has an advantage of a fast debinding rate and thus is world-widely used by many companies. However, since the binder includes different polymer resins such as a polyoxymethylene and a polyolefin for the debinding, injection conditions are difficult to control, and despite good compatibility thereof, there are problems such as swelling, internal defects, and the like in a final product.

Korean Patent Laid-Open Publication No. 2016-0002964 relates to a polyoxymethylene copolymer and a thermoplastic POM composition, and discloses a method of controlling viscosity of the polyoxymethylene copolymer. This discloses a method of preparing a binder for powder injection molding by introducing various monomers in a polymerization process but necessarily performs a pretreatment and requires a quite complicate process and thus has a problem of increasing a manufacturing cost.

Another method proposed in the above patent is described in European Patent Laid-Open Publication Nos. 0446708, 0444475, and 0853995, and provides a binder composed of at least two or more binders (at least one polymer resin and at least one wax-based material), and accordingly, there may be a compatibility problem according to characteristics of each binder material in the kneading step, which may be an obstacle to optimizing the injection process. In addition, since the binder materials have a melting point difference of at least 50 °C or more, each binder may partially agglomerate during the injection process and generate vapors, internal defects, or the like in a final product after the debinding and sintering process in the future. In addition, in the debinding process or the preliminary sintering process, a holding time is required to remove each binder at a specific temperature and thus may have an influence on debinding time and sintering time, and in addition, each binder may be gasified at a different temperature and cause problems of swelling and deformation of a molded body and the like.

Accordingly, the present inventors have made efforts to solve the problem and confirmed that when polyoxymethylene polymers having different viscosities may be mixed within a specific range, although a polyolefin, which is necessarily used for a binder composition of the catalyst debinding method, is not used, and a metal injection molding (MIM) process may be successfully conducted without product defects, completing the present invention.

### [Disclosure]

An object of the present invention is to provide a binder composition for a metal powder injection molding having excellent injection characteristics and debinding/sintering characteristics, and a feedstock composition for metal powder injection molding including the same.

Another object of the present invention is to provide a metal injection molding method having excellent injection characteristics and debinding/sintering characteristics.

In order to achieve the above objects, the present invention provides a binder composition for a metal powder injection molding including 10 to 50 wt% of a high-viscosity polyoxymethylene polymer and 50 to 90 wt% of low-viscosity polyoxymethylene polymer.

In the present invention, the high-viscosity polyoxymethylene polymer has a melt flow index of 1 to 10 g/10 min when measured at a temperature of 190 °C and a load of 2.16 kg according to the ASTM D1238 standard, and the low-viscosity polyoxymethylene polymer has a melt flow index of 40 to 300 g/10 min when measured at a temperature of 190 °C and a load of 2.16 kg according to the ASTM D1238 standard.

In the present invention, the high-viscosity or low-viscosity polyoxymethylene polymer includes (a) an oxymethylene -(OCH₂)n- group as a repeating unit, and (b) an oxymethylene homopolymer capped at both ends by an ester or ether group or an oxymethylene-based copolymer or terpolymer in which oxyalkylene units having 2 to 10 carbon atoms are randomly inserted into a polymer chain composed of oxymethylene monomer units, and (c) both ends of the polymer are capped by ester or ether groups.

The present invention also provides a feedstock composition for a metal powder injection molding including the binder composition for a metal powder injection molding.

In the present invention, the feedstock composition for metal powder injection molding includes: the binder composition for a metal powder injection molding; and (b) a sinterable powdery inorganic material selected from a metal, a metal alloy, a metal carbonyl, a metal oxide, a metal carbide, a metal nitride, and a mixture thereof.

In the present invention, an average particle size of the powder-type inorganic material is 1 µm to 20 µm.

In the present invention, the binder composition for a metal powder injection molding is included in an amount of 20 volume% to 80 volume%, and the powder-type inorganic material is included in an amount of 20 volume% to 80 volume%.

In the present invention, the feedstock composition for a metal powder injection molding further includes an additive selected from a lubricant and a dispersant.

The present invention also includes a metal injection molding method that includes: injection-molding the feedstock composition for the metal powder injection molding to obtain a green part; removing a binder for metal powder injection molding from the green part to obtain a brown part; and sintering the brown part to manufacture a metal product.

In the present invention, the removing of the binder for injection molding of the metal powder is performed for 0.1 to 30 hours at 50 to 140 °C in an acid atmosphere.

By containing polyoxymethylenes alone, which has been produced with different viscosities, without feeding of other monomers in the polymerization process of polyoxymethylene, the binder composition for metal powder injection molding according to the present invention is more economical through low manufacturing costs compared with a conventional technique in which the rate of decomposition by a gas-phase acid is controlled by viscosity adjustment in a polymerization process, and has excellent injection characteristics and debinding/sintering characteristics compared with a technique in which polyoxymethylene and other polymer resins, such as polyolefins and polyamides, are used together.

### [Description of the Drawings]

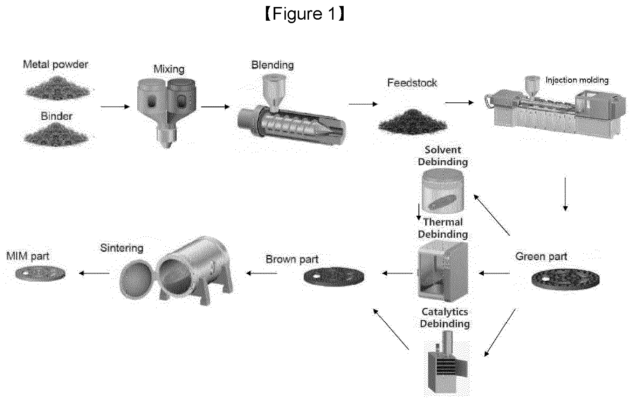

FIG. 1 is an explanatory diagram of a typical metal injection molding process.

### [Mode for Invention]

The present invention is to confirm that when polyoxymethylene polymers having different viscosities are mixed within a specific range, although a polyolefin, which is necessarily used for a binder composition for a catalyst debinding method, is not used, a metal injection molding (MIM) process may be successfully conducted without product defects.

In the present invention, polyoxymethylene produced for each viscosity without adding other monomers in a polymerization process of the polyoxymethylenes is used to apply polyoxymethylenes with high viscosity and low viscosity in preparing a binder composition for a metal powder injection molding. Subsequently, a powder-type inorganic material is added to the prepared binder composition for metal powder injection molding, and then is kneaded to prepare a feedstock composition for metal powder injection molding, and the feedstock composition for metal powder injection molding is injectionmolded to obtain a green part, the green part is debound to obtain a brown part, and then the brown part is sintered, finally obtaining a metal product. As a result of evaluating physical properties of the intermediates produced in each step and the final product, kneading characteristics of the feedstock, injection characteristics of the metal workpiece (brown part), debinding characteristics of the metal workpiece (brown part) after the debinding, and sintering characteristics and quality of the metal product after the sintering are all excellent.

Accordingly, in one aspect, the present invention relates to a binder composition for a metal powder injection molding including 10 to 50 wt% of a high-viscosity polyoxymethylene polymer and 50 to 90 wt% of a low-viscosity polyoxymethylene polymer.

In the present invention, when the content of the high-viscosity polyoxymethylene polymer is less than 10 wt%, a decomposition rate in acid in a gaseous state may not be controlled, so that poor debinding may occur, and when it exceeds 50 wt%, the viscosity increases and there is a problem that the injection molding process is difficult.

The high-viscosity polyoxymethylene polymer has a melt flow index of 1 to 10 g/10 min when measured at a temperature of 190 °C and a load of 2.16 kg according to the ASTM D1238 standard, and the low-viscosity polyoxymethylene polymer has a melt flow index of 40 g/10 min to 300 g/10 min when measured at a temperature of 190 °C and a load of 2.16 kg according to the ASTM D1238 standard.

In the present invention, when the high-viscosity polyoxymethylene polymer has a melt flow index of less than 1 g/10 min, an injection speed should be basically increased to inject small and complex shapes, but since a high molecular weight polymer is used, although an injection pressure is increased, it may be difficult to secure a desired injection speed and inject it into products. Accordingly, there may be injection defects, and since it is not uniformly kneaded with the powder, the products may collapse during the debinding and sintering process.

In addition, when the high-viscosity polyoxymethylene polymer has a melt flow index of greater than 10 g/10 min, since the polymer that serves as a support as much as desired during the debinding may be decomposed, the products may collapse in the debinding and sintering process.

When the low-viscosity polyoxymethylene polymer has a melt flow index of less than 40 g/10 min, overall viscosity of the composition prepared by kneading the high-viscosity and low-viscosity polyoxymethylenes may be lowered, resultantly causing difficulties in injecting small and complex-shaped products. In addition, when the melt flow index is greater than 300 g/10 min, since the polymer is a molecular weight polymer, injection process conditions may be easy to establish, but the products may collapse due to rapid decomposition during the debinding.

In the present invention, the high-viscosity or low-viscosity polyoxymethylene polymer includes (a) an oxymethylene -(OCH₂)n- group as a repeating unit, and (b) an oxymethylene homopolymer capped at both ends by an ester or ether group or an oxymethylene-based copolymer or terpolymer in which oxyalkylene units having 2 to 10 carbon atoms are randomly inserted into a polymer chain composed of oxymethylene monomer units, and (c) both ends of the polymer are capped by ester or ether groups.

In another aspect, the present invention relates to a feedstock composition for the metal powder injection molding including the binder composition for the metal powder injection molding.

The feedstock composition for a metal powder injection molding may include: (a) the binder composition for metal powder injection molding; and (b) a sinterable powdery inorganic material selected from a metal, a metal alloy, a metal carbonyl, a metal oxide, a metal carbide, a metal nitride, and a mixture thereof.

Examples of the metal that may be present in powder form include stainless steel, aluminum, iron, in particular an iron carbonyl powder, chromium, cobalt, copper, nickel, silicon, titanium, and tungsten. Examples of powdered metal alloy include high- or low-alloy steels and metal alloys that include aluminum, iron, titanium, copper, nickel, tungsten, or cobalt as a base. These include powders of already-finished alloys, for example, superalloys such as IN713C, GMR 235, and IN 100, and alloys using main components such as Nd-Fe-B and Sm-Co and that are known from magnet technology and powder mixtures of individual alloy components. Metal powders, metal alloy powders, and metal carbonyl powders, metal oxides, metal carbides, and metal nitrides may also be used for the mixtures.

Suitable inorganic powders are also oxide ceramic powders such as Al₂O₃, ZrO₂, and Y₂O₃, non-oxide ceramic powders such as SiC and Si₃N₄, and additional composite oxide powders such as NiZnFe₂O₄, and in addition, an inorganic color pigment such as CoAl₂O₄.

An average particle size of the powder-type inorganic material is desirably 1 to 20 µm.

The binder composition for the metal powder injection molding may be included in an amount of 20 to 80 volume% and the powder-type inorganic material may be included in an amount of 20 to 80 volume%.

When the binder composition for the metal powder injection molding is included in an amount of less than 20 volume%, there is a problem with mixing characteristics in the kneading and injection, and when the binder composition for the metal powder injection molding is included in an amount of greater than 80 volume%, there is no value in process characteristics as a metal powder injection molding process.

In the present invention, the feedstock composition for the metal powder injection molding further includes an additive selected from a lubricant and a dispersant.

The lubricant is distributed so that the powder-type inorganic material is uniformly and evenly spaced in the binder for metal powder injection molding to improve dimensional stability after sintering, and includes stearic acid, ethylene oxide, diethanolamine, glycerin, sorbitol, behenic acid, and the like, but is not limited thereto.

The dispersant may be a commonly-used dispersant, stearic acid, zincstearate, calcium-stearate, and the like may be exemplified, but is not limited thereto.

Desirably, the lubricant and the dispersant are included in each amount of 3 volume% or less based on 100 volume% of the feedstock composition for the metal powder injection molding.

In another aspect, the present invention relates to a metal injection molding method that includes: injection-molding the feedstock composition for the metal powder injection molding to obtain a green part; removing a binder for metal powder injection molding from the green part to obtain a brown part; and sintering the brown part to manufacture a metal product.

FIG. 1 is an explanatory diagram of a typical metal injection molding process. The metal injection molding method of the present invention is similar to the conventional metal injection molding process of FIG. 1, but is characterized by using the feedstock composition for a metal powder injection molding.

The injection molding may be performed by conventionally using a screw and a ram injection molding machine, and in general, a mold having a temperature of 160 °C to 250 °C under a pressure of 300 bar to 2000 bar at 30 to 250 °C.

A green part obtained through the injection molding should be treated through a debinding reaction to remove a binder for metal powder injection molding, and in the present invention, the debinding reaction is performed under an acid atmosphere at 50 °C to 150 °C for 0.1 hours to 30 hours. An acid for creating the acid atmosphere may be already be in a gaseous form at room temperature or use an inorganic acid that is evaporable at least at a treatment temperature. Examples of the acid may be hydrohalic acid, nitric acid, and the like, but is not limited thereto.

After the debinding reaction, the produced brown part is finally made into a metal product through a sintering process, and the sintering process may be performed at 600 °C to 2000 °C.

### [Examples]

Hereinafter, the present invention will be described in more detail through examples. These examples are only for illustrating the present invention, and it will be apparent to those of ordinary skill in the art that the scope of the present invention is not to be construed as being limited by these examples.

### Examples 1-24 and Comparative Examples 1-12: Preparation of feedstock composition for metal powder injection molding

Each feedstock was prepared by kneading each composition of Tables 1 to 4 in a mixer.

**(Table 1)**

| vol% | Example 1 | Example 2 | Example 3 | Example 4 | Example 5 | Example 6 | Comparative Exam ple 1 | Comparative Exam ple 2 | Comparative Exam ple 3 |
|---|---|---|---|---|---|---|---|---|---|
| Powder -type inorganic material | 55 | 55 | 55 | 55 | 20 | 80 | 55 | 55 | 55 |
| Polyoxymethylene polymer (MFI:1) | 20 | 15 | 10 | 4 | 40 | 10 | 30 | 0 | 7.5 |
| Polyoxymethylene polymer (MFI:40) | 20 | 25 | 30 | 36 | 40 | 10 | 0 | 30 | 7.5 |
| Additive | 5 | 5 | 5 | 5 | 0 | 0 | 5 | 5 | 30 |
| Polyolefin | 0 | 0 | 0 | 0 | 0 | 0 | 10 | 10 | 0 |

**(Table 2)**

| vol% | Exa mple 7 | Exa mple 8 | Exa mple 9 | Exa mple 10 | Exa mple 11 | Exa mple 12 | Comp arative Exam ple 4 | Comp arative Exam ple 5 | Comp arative Exam ple 6 |
|---|---|---|---|---|---|---|---|---|---|
| Powder -type inorganic material | 55 | 55 | 55 | 55 | 20 | 80 | 55 | 55 | 55 |
| Polyoxymethylene polymer (MFI:1) | 20 | 15 | 10 | 4 | 40 | 10 | 30 | 0 | 7.5 |
| Polyoxymethylene polymer (MFI:300) | 20 | 25 | 30 | 36 | 40 | 10 | 0 | 30 | 7.5 |
| Additive | 5 | 5 | 5 | 5 | 0 | 0 | 5 | 5 | 30 |
| Polyolefin | 0 | 0 | 0 | 0 | 0 | 0 | 10 | 10 | 0 |

**(Table 3)**

| vol% | Exa mple 13 | Exa mple 14 | Exa mple 15 | Exa mple 16 | Exa mple 17 | Exa mple 18 | Comp arative Exam ple 7 | Comp arative Exam ple 8 | Comp arative Exam ple 9 |
|---|---|---|---|---|---|---|---|---|---|
| Powder -type inorganic material | 55 | 55 | 55 | 55 | 20 | 80 | 55 | 55 | 55 |
| Polyoxymethylene polymer (MFI: 10) | 20 | 15 | 10 | 4 | 40 | 10 | 30 | 0 | 7.5 |
| Polyoxymethylene polymer (MFI:40) | 20 | 25 | 30 | 36 | 40 | 10 | 0 | 30 | 7.5 |
| Additive | 5 | 5 | 5 | 5 | 0 | 0 | 5 | 5 | 30 |
| Polyolefin | 0 | 0 | 0 | 0 | 0 | 0 | 10 | 10 | 0 |

**(Table 4)**

| vol% | Exa mple 19 | Exa mple 20 | Exa mple 21 | Exa mple 22 | Exa mple 23 | Exa mple 24 | Comp arative Exam ple 10 | Comp arative Exam ple 11 | Comp arative Exam ple 12 |
|---|---|---|---|---|---|---|---|---|---|
| Powder -type inorganic material | 55 | 55 | 55 | 55 | 20 | 80 | 55 | 55 | 55 |
| Polyoxymethylene polymer (MFI:10) | 20 | 15 | 10 | 4 | 40 | 10 | 30 | 0 | 7.5 |
| Polyoxymethylene polymer (MFI:300) | 20 | 25 | 30 | 36 | 40 | 10 | 0 | 30 | 7.5 |
| Additive | 5 | 5 | 5 | 5 | 0 | 0 | 5 | 5 | 30 |
| Polyolefin | 0 | 0 | 0 | 0 | 0 | 0 | 10 | 10 | 0 |

| | | | | | | | | | |
|---|---|---|---|---|---|---|---|---|---|
| * Powder-type inorganic material: STS-316L D50 8 µm, Epson Atmix Corp. * Polyoxymethylene polymer (high viscosity): A material developed by Kolon Plastics Inc. (melt flow index = 1) * Polyoxymethylene polymer (high viscosity): Kolon Plastic K300 (melt flow index = 10) * Polyoxymethylene polymer (low viscosity): Kolon Plastic K900 (melt flow index = 40) * Polyoxymethylene polymer (low viscosity): A material developed by Kolon Plastics Inc. (melt flow index = 300) * Additive: carnayba wax and stearic acid (mixing ratio = 1:1 in a volume ratio) * Polyolefin: UL814, Lotte Chemical Corp. | | | | | | | | | |

### Experimental Example 1: Manufacturing of metal products

### (1) Manufacture of extruded body

The feedstocks according to the examples and the comparative examples were manufactured into extruded bodies (green parts) by fixing extrusion pressure at 1500 bar and molding at 120 °C.

### (2) Debinding of extruded body

After adding nitric acid thereto, the extruded bodies (green parts) were debound at 120 °C under an acid atmosphere for 6 hours, preparing metal debound bodies (brown parts).

### (3) Sintering of metal workpieces

The metal debound bodies (brown parts) were sintered at 1250 °C and 2 °C/min under an H₂ and N₂ mixed gas atmosphere, preparing metal products having a diameter of about 10x20 mm and a weight of 20 g to 30 g.

### Experimental Example 2: Evaluation for each process

The feedstocks according to Examples 1 to 24 and Comparative Examples 1 to 12 and prepared in each step of Experimental Example 1 were evaluated with respect to kneading characteristics, injection characteristics of metal work bodies (brown parts), debinding characteristics of the metal work bodies (brown part) after debinding, and sintering characteristics and quality of metal products after sintering, and the results are shown in Tables 5 to 8.

**(Table 5)**

| Inspection results by process | Exa mple 1 | Exa mple 2 | Exa mple 3 | Exa mple 4 | Exa mple 5 | Exa mple 6 | Com parati ve Exam ple 1 | Com parati ve Exam ple 2 | Com parati ve Exam ple 3 |
|---|---|---|---|---|---|---|---|---|---|
| Kneading characteristics | ○ | ○ | ⊚ | ⊚ | ⊚ | Δ | X | ⊚ | X |
| Injection characteristics | Δ | ○ | ⊚ | ⊚ | ⊚ | Δ | Δ | Δ | X |
| Debinding characteristics | ⊚ | ⊚ | ⊚ | ⊚ | ⊚ | ⊚ | Δ | X | X |
| Sintering characteristics | ○ | ⊚ | ⊚ | ○ | ○ | ⊚ | ○ | Δ | Δ |
| Quality inspection | ○ | ⊚ | ⊚ | ○ | ○ | ○ | ○ | ○ | X |

**(Table 6)**

| Inspection results by process | Exa mple 7 | Exa mple 8 | Exa mple 9 | Exa mple 10 | Exa mple 11 | Exa mple 12 | Comp arative Exam ple 4 | Comp arative Exam ple 5 | Comp arative Exam ple 6 |
|---|---|---|---|---|---|---|---|---|---|
| Kneading characteristics | ○ | ○ | ⊚ | ⊚ | ⊚ | Δ | X | ⊚ | X |
| Injection characteristics | ○ | ○ | ⊚ | ⊚ | ⊚ | ○ | Δ | Δ | X |
| Debinding characteristics | ⊚ | ⊚ | ⊚ | ⊚ | ⊚ | ⊚ | ○ | X | X |
| Sintering characteristics | ○ | ⊚ | ⊚ | ○ | ○ | ⊚ | ○ | Δ | Δ |
| Quality inspection | ○ | ⊚ | ⊚ | ○ | ○ | ○ | ○ | ○ | X |

**(Table 7)**

| Inspection results by process | Exa mple 13 | Exa mple 14 | Exa mple 15 | Exa mple 16 | Exa mple 17 | Exa mple 18 | Comp arative Exam ple 7 | Comp arative Exam ple 8 | Comp arative Exam ple 9 |
|---|---|---|---|---|---|---|---|---|---|
| Kneading characteristics | ○ | ○ | ⊚ | ⊚ | ⊚ | Δ | X | ⊚ | X |
| Injection characteristics | ○ | ○ | ⊚ | ⊚ | ⊚ | ○ | X | ○ | X |
| Debinding characteristics | ⊚ | ⊚ | ⊚ | ⊚ | ⊚ | ⊚ | ○ | X | X |
| Sintering characteristics | ⊚ | ⊚ | ⊚ | ○ | ○ | ⊚ | ○ | X | Δ |
| Quality inspection | ○ | ⊚ | ⊚ | ○ | ○ | ○ | ○ | ○ | X |

**(Table 8)**

| Inspection results by process | Exa mple 19 | Exa mple 20 | Exa mple 21 | Exa mple 22 | Exa mple 23 | Exa mple 24 | Comp arative Exam ple10 | Comp arative Exam ple11 | Comp arative Exam ple12 |
|---|---|---|---|---|---|---|---|---|---|
| Kneading characteristics | ○ | ○ | ⊚ | ⊚ | ⊚ | ○ | X | ⊚ | X |
| Injection characteristics | ○ | ○ | ⊚ | ⊚ | ⊚ | ○ | Δ | Δ | X |
| Debinding characteristics | ⊚ | ⊚ | ⊚ | ⊚ | ⊚ | ⊚ | ○ | X | X |
| Sintering characteristics | ○ | ⊚ | ⊚ | ○ | ○ | ⊚ | ○ | Δ | Δ |
| Quality inspection | ○ | ⊚ | ⊚ | ○ | ○ | ○ | ○ | ○ | X |

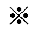 Characteristic evaluation method
1) Kneading characteristics: flow characteristics (Rheological behavior, Viscosity)
2) Injection characteristics: exterior inspection of the extruded body, X-ray internal non-destructive inspection
3) Debinding characteristics: external inspection of debound body, X-ray internal non-destructive inspection
4) Sintering characteristics: Density Measurement
5) Quality inspection: hardness of sintered body, X-ray internal non-destructive inspection

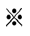 Marking method: Very good - ⊚, Good - ○, Normal - △, Poor - X

Referring to Tables 5 to 8, kneading characteristics, injection characteristics, debinding characteristics, sintering characteristics, and quality of Examples 1 to 24 were normal to very good, and Comparative Examples 1, 4, 7, and 10 using a high-viscosity polyoxymethylene polymer alone exhibited poor kneading characteristics, Comparative Examples 2, 5, 8, and 11 using a low-viscosity polyoxymethylene polymer alone exhibited poor debinding characteristics, and Comparative Examples 3, 6, 9, and 12 including low contents of a powder-type inorganic material and a polyoxymethylene polymer exhibited poor kneading, injection, and debinding characteristics and thereby poor quality.

As the specific parts of the present invention have been described in detail above, for those of ordinary skill in the art, it is clear that these specific descriptions are only preferred embodiments, and the scope of the present invention is not limited thereby. Accordingly, the actual scope of the present invention will be defined by the appended claims and their equivalents.

### [Industrial Applicability]

By containing polyoxymethylenes alone, which has been produced with different viscosities, without feeding of other monomers in the polymerization process of polyoxymethylene, the binder composition for metal powder injection molding according to the present invention is more economical through low manufacturing costs compared with a conventional technique in which the rate of decomposition by a gas-phase acid is controlled by viscosity adjustment in a polymerization process.

## Claims

1. A binder composition for metal powder injection molding, comprising 10 to 50 wt% of a high-viscosity polyoxymethylene polymer and 50 to 90 wt% of a low-viscosity polyoxymethylene polymer.

2. The binder composition for metal powder injection molding of claim 1, wherein the high-viscosity polyoxymethylene polymer has a melt flow index of 1 to 10 g/10 min when measured at a temperature of 190 °C and a load of 2.16 kg according to the ASTM D1238 standard, and the low-viscosity polyoxymethylene polymer has a melt flow index of 40 to 300 g/10 min when measured at a temperature of 190 °C and a load of 2.16 kg according to the ASTM D1238 standard.

3. The binder composition for a metal powder injection molding of claim 1, wherein the high-viscosity or low-viscosity polyoxymethylene polymer includes (a) an oxymethylene -(OCH₂)n- group as a repeating unit, and (b) an oxymethylene homopolymer capped at both ends by an ester or ether group or an oxymethylene-based copolymer or terpolymer in which oxyalkylene units having 2 to 10 carbon atoms are randomly inserted into a polymer chain composed of oxymethylene monomer units, and (c) both ends of the polymer are capped by ester or ether groups.

4. A feedstock composition for metal powder injection molding, comprising the binder composition for the metal powder injection molding of any one of claims 1 to 3.

5. The feedstock composition for a metal powder injection molding of claim 4, wherein the feedstock composition for the metal powder injection molding comprises:
(a) the binder composition for the metal powder injection molding of any one of claims 1 to 3; and
(b) a sinterable powdery inorganic material selected from a metal, a metal alloy, a metal carbonyl, a metal oxide, a metal carbide, a metal nitride, and a mixture thereof.

6. The feedstock composition for a metal powder injection molding of claim 5, wherein an average particle size of the powder-type inorganic material is 1 to 20 µm.

7. The feedstock composition for a metal powder injection molding of claim 5, wherein the binder composition for the metal powder injection molding is included in an amount of 20 to 80 volume% and the powder-type inorganic material is included in an amount of 20 to 80 volume%.

8. The feedstock composition for a metal powder injection molding of claim 5, wherein the feedstock composition for the metal powder injection molding further includes an additive selected from a lubricant and a dispersant.

9. A metal injection molding method, comprising:
Injection-molding the feedstock composition for the metal powder injection molding of claim 4 to obtain a green part; removing a binder for metal powder injection molding from the green part to obtain a brown part; and sintering the brown part to manufacture a metal product.

10. The metal injection molding method of claim 9, wherein removing of the binder for metal powder injection molding is performed for 0.1 to 30 hours at 50 to 140 °C in an acid atmosphere.
